# EUROPEAN PATENT APPLICATION

(11) **EP 4 411 974 A1**
(43) Date of publication of application: **07.08.2024**
(21) Application number: 22876363.7
(22) Date of filing: 28.09.2022
(51) Int. Cl.: H01M 50/538, H01G 11/70, H01G 11/74, H01G 11/82, H01G 11/84, H01M 50/107, H01M 50/533, H01M 50/545, H01M 50/56

(54) **POWER STORAGE DEVICE AND METHOD FOR MANUFACTURING POWER STORAGE DEVICE**

(30) Priority: 30.09.2021 JP 2021161249
(71) Applicant: Panasonic Intellectual Property Management Co., Ltd., Kadoma-shi, Osaka 571-0057 (JP)
(72) Inventor: KOZUKI, Kiyomi, Kadoma-shi, Osaka 571-0057 (JP); SAKAMOTO, Shinichi, Kadoma-shi, Osaka 571-0057 (JP); GESHI, Shinya, Kadoma-shi, Osaka 571-0057 (JP)
(74) Representative: Novagraaf International SA
(86) International application number: PCT/JP2022/036230
(87) International publication number: WO 2023/054497

(57) **Abstract**

A power storage device includes a first electrode having a first current collector, a second electrode having a second current collector, and a separator interposed between the first electrode and the second electrode. The first electrode, the second electrode, and the separator constitute a wound body having a columnar shape. The power storage device further includes a case having a cylindrical bottomed shape for accommodating the wound body, and a current collection plate electrically connected to the first electrode and the case. The first electrode has an overlapping region overlapping the current collection plate when viewed from a case axial direction and a non-overlapping region not overlapping the current collection plate when viewed from the axial direction. The first electrode and the current collection plate are electrically connected to each other in the overlapping region. The first current collector is provided in at least a part of the non-overlapping region, and has a contact part in contact with the case bottom.

## Description

### TECHNICAL FIELD

The present disclosure relates to a power storage device and a method for manufacturing a power storage device.

### BACKGROUND ART

Conventionally, there has been known a power storage device including an electrode assembly in which a current collector is exposed at one end, a case having a cylindrical bottomed shape that accommodates the electrode assembly, and a current collection plate provided between the electrode assembly and a bottom of the case (for example, PTL 1). In the power storage device of PTL 1, the current collection plate is mechanically and electrically connected to the exposed current collector and the bottom of the case.

### Citation List

### Patent Literature

PTL 1: US 2010/0216001 A

### SUMMARY OF THE INVENTION

Further improvement of reliability of a power storage device is desired. In such a situation, an object of the present disclosure is to improve reliability of a power storage device.

One aspect according to the present disclosure relates to a power storage device. The power storage device includes: a first electrode including a first current collector having a strip shape and a first active material layer supported on the first current collector; a second electrode including a second current collector having a strip shape and a second active material layer supported on the second current collector; and a separator interposed between the first electrode and the second electrode; the first electrode, the second electrode, and the separator constituting a wound body having a columnar shape; the power storage device further including: a case having a cylindrical bottomed shape that accommodates the wound body; and a current collection plate that is provided between the first electrode and a bottom of the case and is electrically connected to both the first electrode and the bottom of the case; in which the first electrode includes an overlapping region overlapping the current collection plate when viewed from an axial direction of the case, and a non-overlapping region not overlapping the current collection plate when viewed from the axial direction, the first electrode and the current collection plate are electrically connected to each other in the overlapping region, and the first current collector of the first electrode has a contact part that is provided in at least a part of the non-overlapping region and contacts the bottom of the case.

Another aspect of the present disclosure relates to a method for manufacturing a power storage device. The manufacturing method is a method for manufacturing the power storage device described above, the method including: a first step of electrically connecting the first electrode of the wound body and the current collection plate in the overlapping region; a second step of accommodating the wound body and the current collection plate in the case, and bringing the first current collector into contact with the bottom of the case in at least a part of the non-overlapping region to form the contact part; and a third step of electrically connecting the current collection plate and the case.

According to the present disclosure, the reliability of the power storage device can be improved.

### BRIEF DESCRIPTION OF THE DRAWINGS

Fig. 1 is a longitudinal cross-sectional view schematically illustrating one example of a power storage device according to the present disclosure.
Fig. 2 is a perspective view of a wound body as viewed from a bottom of a case.
Fig. 3 is a perspective view of the wound body and a current collection plate as viewed from the bottom of the case.
Fig. 4 is a cross-sectional view of the power storage device taken along line IV-IV in Fig. 3, and shows a vicinity of the bottom of the case in an enlarged manner.
Fig. 5 is a cross-sectional view of the power storage device taken along line V-V in Fig. 3, and shows a vicinity of the bottom of the case in an enlarged manner.
Fig. 6A is a view showing a jig used in a method for manufacturing a power storage device according to a first exemplary embodiment, and is a plan view.
Fig. 6B is a view showing the jig used in the method for manufacturing a power storage device according to the first exemplary embodiment, and is an end view taken along line B-B.
Fig. 6C is a view showing the jig used in the method for manufacturing a power storage device according to the first exemplary embodiment, and is an end view taken along line C-C.
Fig. 6D is a view showing the jig used in the method for manufacturing a power storage device according to the first exemplary embodiment, and is an end view taken along line D-D.
Fig. 7A is a view for explaining a usage mode of the jig, and is an end view corresponding to line B-B in Fig. 6.
Fig. 7B is a view for explaining a usage mode of the jig, and is an end view corresponding to line D-D in Fig. 6.
Fig. 8A is a view for explaining a method for manufacturing a power storage device according to a second exemplary embodiment, and is a perspective view of a wound body.
Fig. 8B is a view for explaining the method for manufacturing a power storage device according to the second exemplary embodiment, and is a perspective view of the wound body after a fourth step.
Fig. 8C is a view for explaining the method for manufacturing a power storage device according to the second exemplary embodiment, and is a perspective view of the wound body after a fifth step.

### DESCRIPTION OF EMBODIMENT

Hereinafter, exemplary embodiments of a power storage device and a method for manufacturing the power storage device according to the present disclosure will be described by way of examples. However, the present disclosure is not limited to the examples described below. Although specific numerical values and materials may be provided as examples in the description below, other numerical values and materials may be applied as long as the effects of the present disclosure can be obtained.

### (Power storage device)

A power storage device according to the present disclosure includes a first electrode having a strip shape, a second electrode having a strip shape, and a separator interposed between the first electrode and the second electrode. The first electrode, the second electrode, and the separator constitute a wound body having a columnar shape. That is, the first electrode and the second electrode are wound with the separator interposed therebetween.

The first electrode includes a first current collector having a strip shape and a first active material layer supported on the first current collector. The second electrode includes a second current collector having a strip shape and a second active material layer supported on the second current collector.

The power storage device further includes a case having a cylindrical bottomed shape that accommodates the wound body, and a current collection plate provided between the first electrode and a bottom of the case and is electrically connected to the first electrode and the bottom of the case.

The first electrode has an overlapping region overlapping the current collection plate when viewed from an axial direction of the case (hereinafter, it is also simply referred to as an axial direction) and a non-overlapping region not overlapping the current collection plate when viewed from the axial direction. The shape of the overlapping region corresponds to the shape of the current collection plate. For example, when the current collection plate has a cross shape, the overlapping region also has a cross shape. The non-overlapping region is a region of the first electrode that is not included in the overlapping region when viewed from the axial direction.

The first electrode and the current collection plate are electrically connected to each other in the overlapping region. This connection may be realized in various manners. For example, the first electrode and the current collection plate may be connected to each other by welding (for example, laser welding), brazing, or bonding. The first electrode and the current collection plate may be electrically and mechanically connected to each other in the overlapping region.

The first current collector of the first electrode is provided in at least a part of the non-overlapping region, and has a contact part in contact with the bottom of the case. That is, the first current collector is connected to the bottom of the case via the current collection plate in the overlapping region, and is in direct contact with the bottom of the case at the contact part in the non-overlapping region. Therefore, as a path for radiating heat generated during charging and discharging from the first electrode, a path passing through the contact part and the case is formed in addition to a path passing through the current collection plate and the case that is conventionally present. Therefore, the heat dissipation characteristics of the power storage device can be improved, and the reliability of the power storage device can be enhanced. Further, since a current path that can be used for charging and discharging is formed between the contact part and the bottom of the case, the resistance of the power storage device can be reduced. The overlapping region and the non-overlapping region may be formed at an end of the wound body closer to a sealing plate of the power storage device, and the contact part may be brought into contact with the sealing plate or a conductive member that electrically connects the current collection plate and the sealing plate.

The first current collector may have a first non-applied part where the first active material layer is not formed at one end in a lateral direction (alternatively, in a width) of the first current collector. In the wound body, the first electrode, the second electrode, and the separator may be wound in a state where the first non-applied part protrudes from the second electrode in the axial direction of the case. The overlapping region and the non-overlapping region may be configured of the first non-applied part being wound.

The contact part may be bent in the radial direction of the case and may be in surface contact with the bottom of the case. With this configuration, heat transfer characteristics between the contact part and the bottom of the case are enhanced, and heat dissipation characteristics of the power storage device can be further improved. Furthermore, the direction of the wound body can be stabilized by the contact part in surface contact with the bottom of the case.

The contact part may be bent inward in the radial direction of the case. For example, the contact part may be formed by bending an end of the first current collector inward in the radial direction of the case. This makes it possible to easily form the contact part while suppressing breakage of the first electrode.

The current collection plate may have a connection part connected to the case, and at least one arm extending from the connection part in the radial direction of the case and connected to the first electrode. In the current collection plate, the connection part may be located at the center and protrude toward the bottom of the case from the arm. By using such a connection part, the connection part can be easily pressed against the bottom of the case from the wound body toward the bottom of the case. Therefore, when the connection part and the bottom of the case are welded and joined from the outside of the case, it is possible to suppress a welding defect caused by separation between the bottom of the case and the connecting part. Further, in the connection part, a surface on a back side of a surface facing the bottom of the case may be recessed.

In the axial direction of the case, a length of a part of the first current collector in the non-overlapping region that extends toward the bottom of the case beyond a connection point between the current collection plate and the first electrode may be longer than a distance from the connection point between the current collection plate and the first electrode to a connection point between the current collection plate and the bottom of the case. With this configuration, it is possible to easily bring a distal end (contact part) of the first current collector in the axial direction into contact with the bottom of the case in a bent shape.

The contact part may be closer to the inside than the outside of the wound body in the radial direction of the case. Alternatively, the contact part may be closer to the outer side than the inner side of the non-overlapping region in the circumferential direction of the case. With this configuration, the contact part can be more easily formed in the non-overlapping region. In addition, the current collector in the contact part can be made dense. Further, the breakage of the first current collector in the non-overlapping region can be suppressed, and the reliability of the power storage device is enhanced.

The non-overlapping region may be disposed in the outer side of the contact part in the radial direction of the case, and may include a region (non-contact region) farther from the bottom of the case than the contact part. With this configuration, the contact part can be more easily formed in the non-overlapping region. In addition, by providing the contact part on the inner side in the radial direction of the case in the non-overlapping region, the circumferential dimension of the contact part is smaller than the circumferential dimension of the contact part provided on the outer side in the radial direction. Therefore, tension in the circumferential direction is suppressed on the current collector constituting the contact part, and the current collector constituting the contact part is less likely to be bent (or warped) in the radial direction, and it is easier to form the contact part.

The first current collector may be bent in the radial direction of the case in the overlapping region and the non-overlapping region, and the bent part of the overlapping region may be longer than the bent part of the non-overlapping region. In this configuration, since the deformation allowance of the first current collector in the overlapping region is small, rigidity in the overlapping region can be increased, and when the current collection plate is joined in the overlapping region, a reaction force is easily obtained from the first current collector when the first current collector in the overlapping region is pressed via the current collection plate. Therefore, the current collection plate and the first current collector in the overlapping region are easily joined.

### (Method for manufacturing power storage device)

A method for manufacturing a power storage device according to the present disclosure is a method for manufacturing the power storage device described above, and includes a first step, a second step, and a third step.

In the first step, the first electrode of the wound body and the current collection plate are electrically connected in the overlapping region of the first electrode. This connection may be realized in various manners. For example, the first electrode and the current collection plate may be connected to each other by welding (for example, laser welding), brazing, or bonding.

In the second step, the wound body and the current collection plate are accommodated in the case, and the first current collector is brought into contact with the bottom of the case in at least a part of the non-overlapping region of the first electrode to form a contact part. The contact part may be formed in advance before the wound body and the current collection plate are accommodated in the case, or may be formed using the bottom of the case at the time of the accommodating.

In the third step, the current collection plate and the case are electrically connected. This connection may be realized in various manners. For example, the current collection plate and the case may be electrically connected by laser welding, ultrasonic welding, or brazing. The current collection plate and the case may be electrically and mechanically connected.

In the first step, the first electrode and the current collection plate may be electrically connected in a state where the current collection plate is sandwiched between a jig having a recess corresponding to the non-overlapping region and the wound body. The jig may be used with the surface on which the recess is formed facing the first electrode. The overlapping region of the first electrode is recessed according to the shape of the current collection plate by the current collection plate sandwiched between the jig and the wound body. On the other hand, the non-overlapping region of the first electrode is accommodated in the recess of the jig, and an end of the non-overlapping region is bent in contact with the bottom surface of the recess. As a result, the non-overlapping region of the first electrode is provided with a shape corresponding to the contact part in surface contact with the bottom of the case.

The method for manufacturing the power storage device may further include: prior to the first to third steps, a fourth step of pressing the first current collector in the overlapping region of the first electrode to make the non-overlapping region protrude from the overlapping region; and prior to the first to third steps, a fifth step of pressing the first current collector shallower than in the fourth step in the non-overlapping region of the first electrode to form a surface bent with respect to the axial direction in the non-overlapping region. In the fourth step, the overlapping region may be pressed so as to correspond to the shape of the current collection plate. The fifth step gives the non-overlapping region a shape corresponding to the contact part in surface contact with the bottom of the case. Various instruments (for example, a roller) can be used to press the first electrode in the fourth step and the fifth step. Either the fourth step or the fifth step may be performed first, or both the steps may be performed simultaneously.

As described above, according to the present disclosure, the reliability of the power storage device can be improved. Further, according to the present disclosure, it is possible to reduce the resistance of the power storage device. Furthermore, according to the present disclosure, the attitude of the wound body can be stabilized in the case.

Hereinafter, one example of the power storage device and the method for producing the power storage device according to the present disclosure will be specifically described with reference to the drawings. The above-described configuration elements and steps can be applied to configuration elements and steps of a power storage device and a method for manufacturing the power storage device of one example described below. The configuration elements and steps of the power storage device and the method for manufacturing the power storage device of the one example described below can be changed based on the above description. Then, a matter described below may be applied to the exemplary embodiment described above. Among the configuration elements and steps of the power storage device and the method for manufacturing the power storage device of the one example described below, configuration elements and steps that are not essential for the power storage device and the method for manufacturing the power storage device according to the present disclosure may be omitted. Note that the following drawings are schematic and do not accurately reflect the shape and number of actual members.

### <<First exemplary embodiment>>

A first exemplary embodiment of the present disclosure will be described. Power storage device 10 of the present exemplary embodiment is a lithium ion secondary battery. However, power storage device 10 of the present disclosure is not limited thereto. For example, power storage device 10 may be a lithium ion capacitor, an electric double layer capacitor, a power storage device that is intermediate between a lithium ion secondary battery and a lithium ion capacitor, or another electrochemical device.

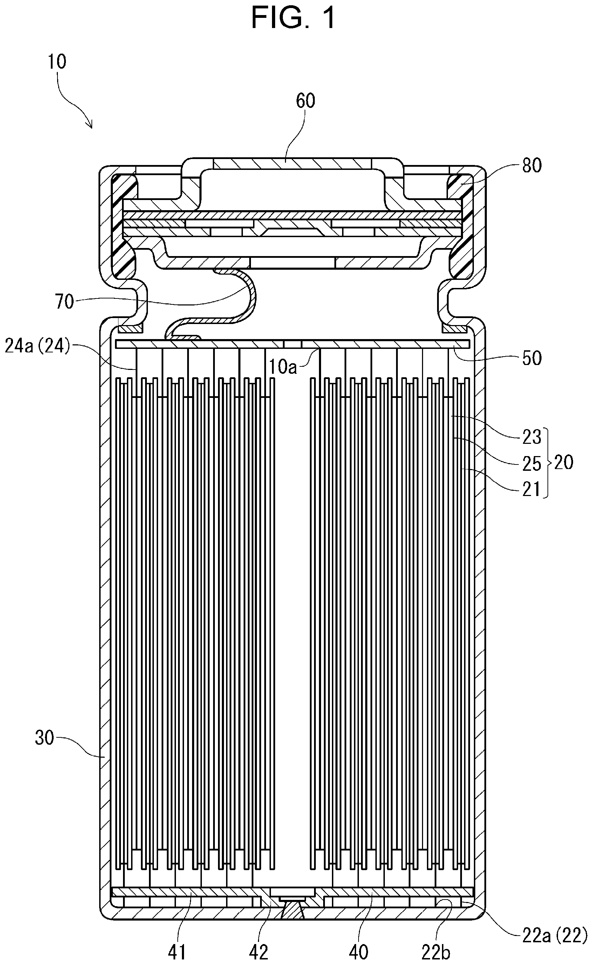

As shown in Fig. 1 to Fig. 5, power storage device 10 includes negative electrode 21 having a strip shape, positive electrode 23 having a strip shape, and separator 25 interposed between negative electrode 21 and positive electrode 23. Negative electrode 21, positive electrode 23, and separator 25 constitute wound body 20 having a columnar shape. That is, negative electrode 21 and positive electrode 23 are wound with separator 25 interposed therebetween. In wound body 20, negative electrode 21 and positive electrode 23 face each other while being shifted in the axial direction such that positive-electrode current collector exposed part 24a and negative-electrode current collector exposed part 22a described later protrude in opposite directions to each other.

Negative electrode 21 includes negative-electrode current collector 22 having a strip shape and a negative-electrode active material layer (not illustrated) supported on negative-electrode current collector 22. The negative-electrode active material layer is formed on both surfaces of negative-electrode current collector 22. Here, negative-electrode current collector exposed part 22a having no negative-electrode active material layer is formed on one end of negative-electrode current collector 22 in a longitudinal direction. Negative electrode 21 is one example of a first electrode. Negative-electrode current collector 22 is one example of a first current collector. The negative-electrode active material layer is one example of a first active material layer. Negative-electrode current collector exposed part 22a is one example of a first non-applied part.

A metal material having a sheet shape is used for negative-electrode current collector 22. The metal material having a sheet shape may be a metal foil, a porous metal body, or the like. As the metal material, copper, a copper alloy, nickel, stainless steel, or the like may be used. The thickness of negative-electrode current collector 22 is, for example, from 10 µm to 100 µm inclusive.

The negative-electrode active material layer contains, for example, a negative electrode active material, a conductive agent, and a binding agent. The negative-electrode active material layer is obtained, for example, by applying a negative electrode mixture slurry containing the negative electrode active material, the conductive agent, and the binding agent to both surfaces of negative-electrode current collector 22, drying the applied film, and then rolling the applied film. The negative electrode active material is a material that occludes and releases lithium ions. Examples of the negative electrode active material include a carbon material, a metal compound, an alloy, and a ceramic material.

Positive electrode 23 has positive-electrode current collector 24 having a strip shape and a positive-electrode active material layer (not shown) supported on positive-electrode current collector 24. The positive-electrode active material layer is formed on both surfaces of positive-electrode current collector 24. Positive-electrode current collector exposed part 24a having no positive-electrode active material layer is formed on one end of positive-electrode current collector 24 in the longitudinal direction. Positive electrode 23 is one example of a second electrode. Positive-electrode current collector 24 is one example of a second current collector. The positive-electrode active material layer is one example of a second active material layer.

A metal material having a sheet shape is used for positive-electrode current collector 24. The metal material having a sheet shape may be a metal foil, a porous metal body, or the like. As the metal material, aluminum, an aluminum alloy, nickel, titanium, or the like may be used. The thickness of positive-electrode current collector 24 is, for example, from 10 µm to 100 µm inclusive.

The positive-electrode active material layer contains, for example, a positive electrode active material, a conductive agent, and a binding agent. The positive-electrode active material layer is obtained, for example, by applying a positive electrode mixture slurry containing the positive electrode active material, the conductive agent, and the binding material to both surfaces of positive-electrode current collector 24, drying the applied film, and then rolling the applied film. The positive electrode active material is a material that occludes and releases lithium ions. Examples of the positive electrode active material include lithium-containing transition metal oxides, transition metal fluorides, polyanions, fluorinated polyanions, transition metal sulfides, and the like.

Separator 25 has a strip shape, and for example, a microporous membrane formed of a resin such as polyolefin, a woven fabric, a nonwoven fabric, or the like can be used. The thickness of separator 25 is, for example, from 10 µm to 300 µm inclusive, and preferably from 10 µm to 40 µm inclusive.

Power storage device 10 further includes case 30 having a cylindrical bottomed shape that accommodates wound body 20 described above, negative-electrode current collection plate 40 and positive-electrode current collection plate 50, and sealing plate 60 that seals an opening of case 30.

Case 30 is configured of a metal material (for example, aluminum). Case 30 may be in a bottomed cylindrical shape, but is not limited thereto. Case 30 functions as a negative-electrode terminal of power storage device 10.

Negative-electrode current collection plate 40 is provided between negative electrode 21 (alternatively, wound body 20) and the bottom of case 30. Negative-electrode current collection plate 40 is electrically connected to negative-electrode current collector exposed part 22a and the bottom of case 30. The electrical connection between negative-electrode current collector exposed part 22a and negative-electrode current collection plate 40 may be made by, for example, laser welding. The electrical connection between the bottom of case 30 and negative-electrode current collection plate 40 may be made by, for example, ultrasonic welding. Negative-electrode current collection plate 40 is one example of a current collector.

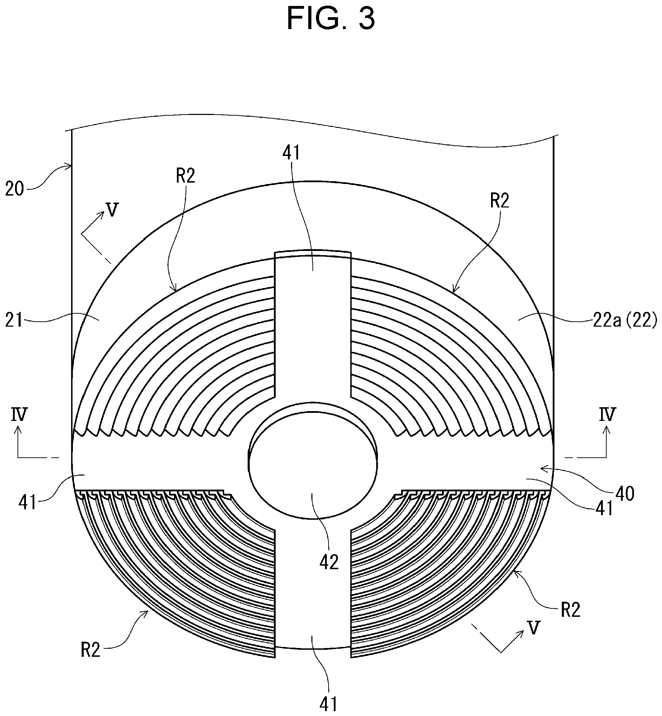

As shown in Fig. 3, negative-electrode current collection plate 40 is formed in a cross shape as a whole. Negative-electrode current collection plate 40 includes a plurality of (in this example, four) arms 41 extending in a radial direction of case 30, and protrusion 42 protruding toward the bottom of case 30. The number of arms 41 may be three or less, or may be five or more. Negative-electrode current collection plate 40 may be connected to the bottom of case 30 at protrusion 42. Negative-electrode current collection plate 40 may have a ring-shaped part connecting the distal ends of the plurality of arms 41. Protrusion 42 is one example of a connection part.

Positive-electrode current collection plate 50 is provided between positive electrode 23 (alternatively, wound body 20) and sealing plate 60, and is electrically connected to positive-electrode current collector exposed part 24a and sealing plate 60. The electrical connection between positive-electrode current collector exposed part 24a and positive-electrode current collection plate 50 may be made by, for example, laser welding. Sealing plate 60 and positive-electrode current collection plate 50 may be connected via metal lead 70.

Sealing plate 60 is configured of a conductive member (for example, metal). Sealing plate 60 is caulked to an opening edge of case 30 via gasket 80. With such a configuration, the opening of case 30 is sealed. Sealing plate 60 functions as a positive-electrode terminal of power storage device 10.

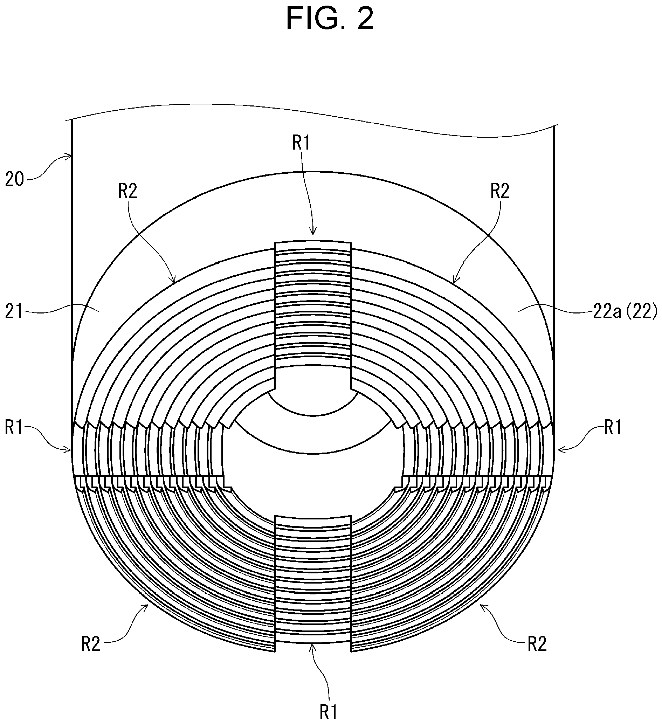

As shown in Fig. 2 and Fig. 3, negative electrode 21 has overlapping region R1 overlapping negative-electrode current collection plate 40 when viewed from the axial direction of case 30 (hereinafter, it is also simply referred to as the axial direction), and non-overlapping region R2 not overlapping negative-electrode current collection plate 40 when viewed from the axial direction. Overlapping region R1 of the present exemplary embodiment has a cross shape. In the present exemplary embodiment, four non-overlapping regions R2 are formed and each has a fan shape.

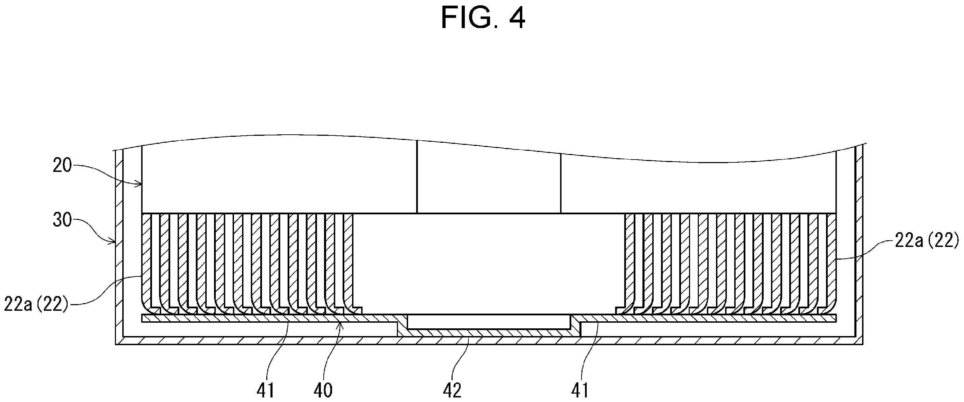

As shown in Fig. 4, negative electrode 21 and negative-electrode current collection plate 40 are electrically connected to each other in overlapping region R1. This electrical connection may be made by, for example, laser welding performed in the longitudinal direction of each arm 41. In this case, negative electrode 21 and negative-electrode current collection plate 40 are electrically and mechanically connected in overlapping region R1.

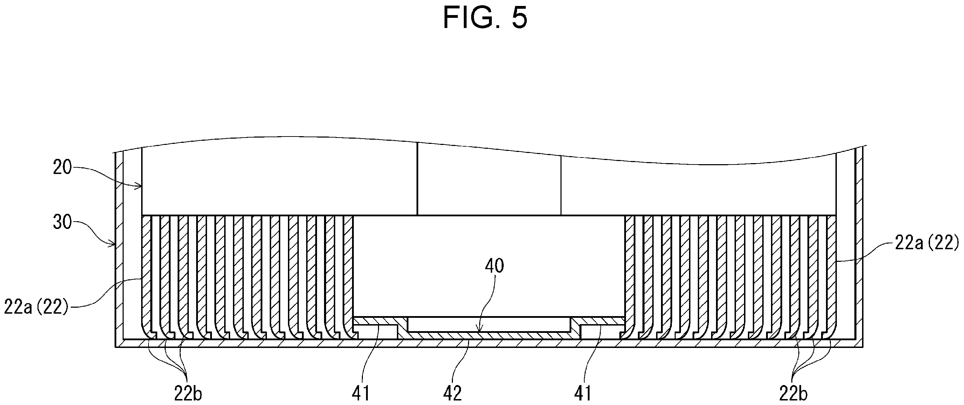

As shown in Fig. 5, negative-electrode current collector 22 is provided in at least a part of non-overlapping region R2, and has contact part 22b in contact with the bottom of case 30. Contact part 22b is located closer to the bottom of case 30 than the joint between arm 41 and overlapping region R1. Contact part 22b is formed by bending an end of negative-electrode current collector exposed part 22a, and is in surface contact with the bottom of case 30. Contact part 22b extends inward in the radial direction of case 30.

### (Method for manufacturing power storage device)

Next, a method for manufacturing power storage device 10 of the present exemplary embodiment will be described. The manufacturing method includes a first step, a second step, and a third step.

In the first step, negative electrode 21 and negative-electrode current collection plate 40 are electrically connected in overlapping region R1 of negative electrode 21. This electrical connection may be made by, for example, laser welding performed in the longitudinal direction of each arm 41.

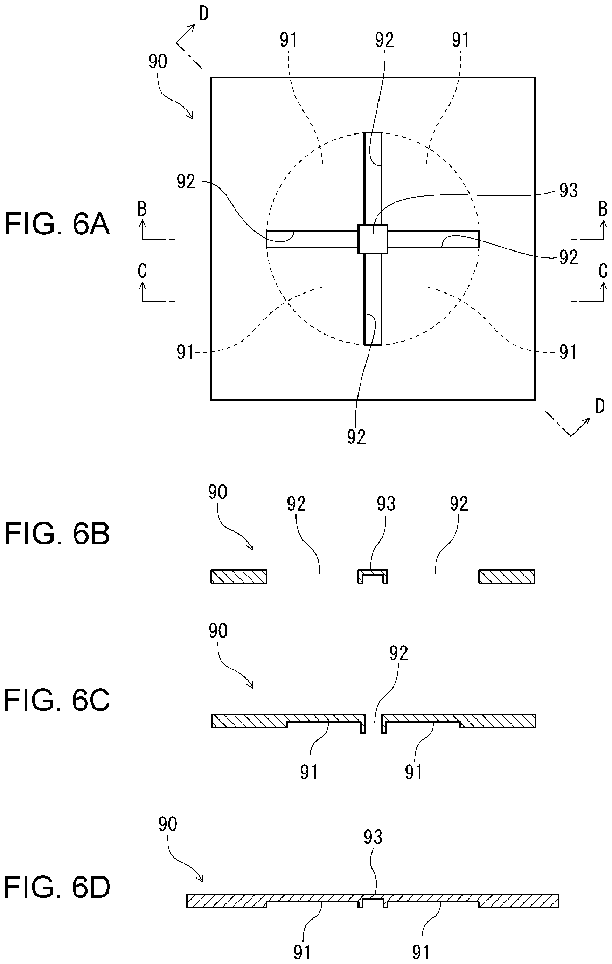

In the first step of the present exemplary embodiment, jig 90 illustrated in Figs. 6(a) to 6(d) is used. As illustrated in Fig. 6(a), jig 90 is formed in a rectangular plate shape as a whole. As illustrated in Figs. 6(a) to 6(d), jig 90 has recess 91 corresponding to non-overlapping region R2 on one surface of jig 90. In the present exemplary embodiment, four recesses 91 are provided and each has a fan shape. Slit 92 corresponding to overlapping region R1 is formed between adjacent recesses 91. Pressing part 93 for pressing negative-electrode current collection plate 40 is provided at a center of jig 90.

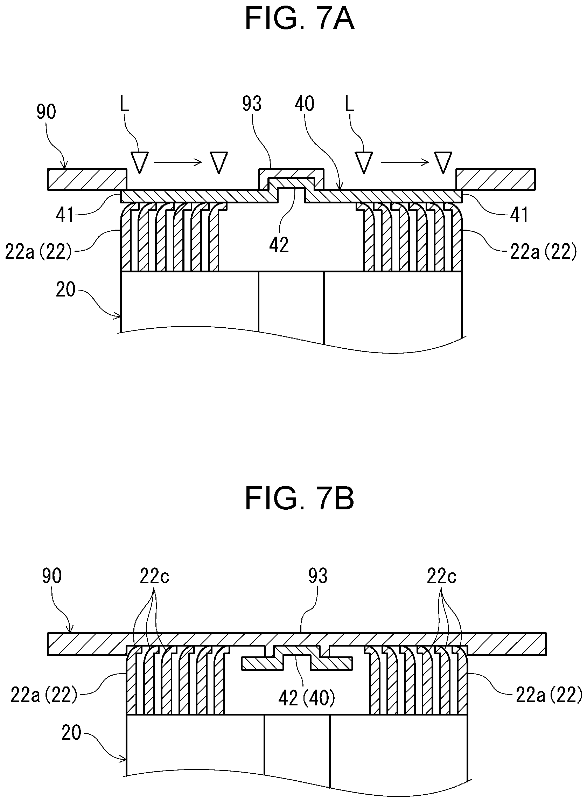

In the first step, as shown in Figs. 7A and 7B, negative electrode 21 and negative-electrode current collection plate 40 are electrically connected with negative-electrode current collection plate 40 sandwiched between jig 90 and wound body 20. Accordingly, the bent part (bent surface 22c) corresponding to contact part 22b can be formed at the end of negative-electrode current collector exposed part 22a while the electrical connection between negative electrode 21 and negative-electrode current collection plate 40 is realized. Fig. 7A illustrates laser beam L used for laser welding.

In the second step, wound body 20 and negative-electrode current collection plate 40 are accommodated in case 30, and negative-electrode current collector 22 is brought into contact with the bottom of case 30 in at least a part of the non-overlapping region of negative electrode 21 to form contact part 22b.

In the third step, negative-electrode current collection plate 40 and case 30 are electrically connected. The electrical connection may be made by, for example, laser welding.

### <<Second exemplary embodiment>>

A second exemplary embodiment of the present disclosure will be described. A method for manufacturing a power storage device of the present exemplary embodiment is different from the method of the first exemplary embodiment in that jig 90 is not used. Hereinafter, differences from the first exemplary embodiment will be mainly described.

The method for manufacturing the power storage device of the present exemplary embodiment includes a fourth step and a fifth step. In the following description, the fifth step is executed after the fourth step, but the execution order of both steps is not limited thereto.

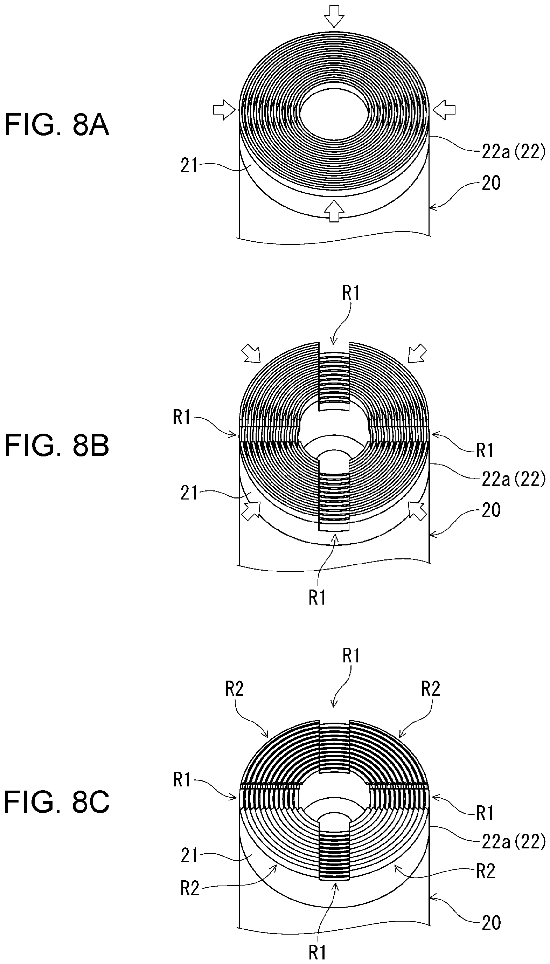

In the fourth step, as shown in Figs. 8A and 8B, prior to the first to third steps, in overlapping region R1 of negative electrode 21, negative-electrode current collector 22 is pressed to make non-overlapping region R2 protrude from overlapping region R1. For example, the fourth step may be executed by rolling a roller (not illustrated) in an arrow direction of Fig. 8A while the roller is pressed against negative-electrode current collector exposed part 22a.

In the fifth step, as shown in Figs. 8B and 8C, prior to the first to third steps, in non-overlapping region R2 of negative electrode 21, negative-electrode current collector 22 is pressed shallower than in the fourth step to form a surface (bent surface 22c) bent with respect to the axial direction in non-overlapping region R2. For example, the fifth step may be executed by rolling a roller (not illustrated) in an arrow direction of Fig. 8B while the roller is pressed against negative-electrode current collector exposed part 22a.

### INDUSTRIAL APPLICABILITY

The present disclosure can be used for a power storage device and a method for manufacturing a power storage device.

### REFERENCE MARKS IN THE DRAWINGS

- 10: power storage device
- 20: wound body
- 21: negative electrode (first electrode)
- 22: negative-electrode current collector (first current collector)
- 22a: negative-electrode current collector exposed part (first non-applied part)
- 22b: contact part
- 22c: bent surface
- 23: positive electrode (second electrode)
- 24: positive-electrode current collector (second current collector)
- 24a: positive-electrode current collector exposed part
- 25: separator
- 30: case
- 40: negative-electrode current collection plate (current collection plate)
- 41: arm
- 42: protrusion (connection part)
- 50: positive-electrode current collection plate
- 60: sealing plate
- 70: lead
- 80: gasket
- 90: jig
- 91: recess
- 92: slit
- 93: pressing part
- L: laser beam
- R1: overlapping region
- R2: non-overlapping region

## Claims

1. A power storage device comprising:
a first electrode including a first current collector including a strip shape and a first active material layer supported on the first current collector;
a second electrode including a second current collector including a strip shape and a second active material layer supported on the second current collector; and
a separator interposed between the first electrode and the second electrode,
the first electrode, the second electrode, and the separator constituting a wound body including a columnar shape;
the power storage device further comprising:
a case including a cylindrical bottomed shape that accommodates the wound body; and
a current collection plate that is provided between the first electrode and a bottom of the case and is electrically connected to both the first electrode and the bottom of the case, wherein
the first electrode includes an overlapping region overlapping the current collection plate when viewed from an axial direction of the case, and a non-overlapping region not overlapping the current collection plate when viewed from the axial direction,
the first electrode and the current collection plate are electrically connected to each other in the overlapping region, and
the first current collector of the first electrode includes a contact part that is provided in at least a part of the non-overlapping region and contacts the bottom of the case.

2. The power storage device according to Claim 1, wherein the first current collector includes a first non-applied part where the first active material layer is not disposed at one end in a lateral direction of the first current collector,
in the wound body, the first electrode, the second electrode, and the separator are wound in a state where the first non-applied part protrudes from the second electrode in the axial direction of the case, and
the overlapping region and the non-overlapping region are configured of the first non-applied part that is wound.

3. The power storage device according to Claim 1 or 2, wherein the contact part is bent in a radial direction of the case and is in surface contact with the bottom of the case.

4. The power storage device according to any one of Claims 1 to 3, wherein the contact part is bent inward in a radial direction of the case.

5. The power storage device according to any one of Claims 1 to 4, wherein the current collection plate includes a connection part connected to the case, and at least one arm extending in a radial direction of the case from the connection part and connected to the first electrode.

6. The power storage device according to any one of Claims 1 to 5, wherein in the axial direction of the case, a length of a part of the first current collector in the non-overlapping region that extends toward the bottom of the case beyond a connection point between the current collection plate and the first electrode is longer than a distance from the connection point between the current collection plate and the first electrode to a connection point between the current collection plate and the bottom of the case.

7. The power storage device according to any one of Claims 1 to 6, wherein the contact part is disposed closer to an inner side than an outer side of the wound body in a radial direction of the case, or is disposed closer to an outer side than an inner side of the non-overlapping region in a circumferential direction of the case.

8. The power storage device according to any one of Claims 1 to 7, wherein the non-overlapping region is disposed outside the contact part in a radial direction of the case, and includes a region farther from a bottom of the case than the contact part.

9. The power storage device according to any one of Claims 1 to 8, wherein the first current collector includes a first bent part that is bent in a radial direction of the case in the overlapping region and a second bent part that is bent in the radial direction of the case in the non-overlapping region, and the first bent part of the overlapping region is longer than the second bent part of the non-overlapping region.

10. A method for manufacturing the power storage device according to any one of Claims 1 to 9, the method comprising:
a first step of electrically connecting the first electrode of the wound body and the current collection plate in the overlapping region;
a second step of accommodating the wound body and the current collection plate in the case, and bringing the first current collector into contact with the bottom of the case in at least a part of the non-overlapping region to form the contact part; and
a third step of electrically connecting the current collection plate and the case.

11. The method for manufacturing the power storage device according to Claim 10, wherein in the first step, the first electrode and the current collection plate are electrically connected in a state where the current collection plate is sandwiched between a jig including a recess corresponding to the non-overlapping region and the wound body.

12. The method for manufacturing the power storage device according to Claim 10, further comprising:
prior to the first to third steps, a fourth step of pressing the first current collector in the overlapping region of the first electrode to make the non-overlapping region protrude from the overlapping region; and
prior to the first to third steps, a fifth step of pressing the first current collector shallower than in the fourth step in the non-overlapping region of the first electrode to form a surface bent with respect to the axial direction in the non-overlapping region.
